# EUROPEAN PATENT APPLICATION

(11) **EP 2 518 670 A1**
(43) Date of publication of application: **31.10.2012**
(21) Application number: 10856895.7
(22) Date of filing: 25.11.2010
(51) Int. Cl.: G06Q 20/00

(54) **SYSTEM AND METHOD FOR REMOTE PAYMENT BASED ON MOBILE TERMINAL**

(30) Priority: 07.09.2010 WO PCT/CN2010/276067
(71) Applicant: ZTE Corporation, Shenzhen, Guangdong 518057 (CN)
(72) Inventor: ZHANG, Zhibang, Guangdong 518057 (CN); LIAN, Dianbin, Guangdong 518057 (CN)
(74) Representative: Krauns, Christian
(86) International application number: PCT/CN2010/079140
(87) International publication number: WO 2012/031433

(57) **Abstract**

The present invention discloses a method for remote payment based on a mobile terminal. The method includes: an authentication server asking a mobile terminal for a digital certificate, the mobile terminal transmitting an certificate reading instruction to the built-in smart card, and after the smart card exports the stored digital certificate, the mobile terminal transmitting it to the authentication server for certificate registration, and the authentication server sending a signature instruction to the mobile terminal, the mobile terminal transmitting a private key signature instruction to the built-in smart card, the smart card sending out the signature result and the mobile terminal reporting the signature result to the authentication server. The present invention also discloses a system for remote payment based on mobile terminal, a mobile terminal and a smart card. The present invention not only breaks through the limitation of short distance of the mobile phone payment, but also has more security and privacy than the manner of transmitting the personal ID and password by using short message and WAP.

## Description

### Technical Field

The present invention relates to the field of mobile communication technology, and in particular, to a system and method for remote payment based on a mobile terminal, and a mobile terminal and a smart card of the mobile terminal in the system.

### Background of the Related Art

With the gradual popularization of online shopping in daily life, the remote payment function is accepted by more and more people. Now, the means of network payment is generally realized through the bank card and it has a very high demand for the network security, and it generally needs to use the digital certificate. With the popularization and application of the concept of the mobile phone payment, the mobile phone payment is favored by the people for the characteristics, such as the high popularization of the mobile phone and the easy payment, etc.

The mainstream mobile phone payment technology mainly has the following three kinds at present:
the first kind is the Near Field Communication (NFC) Technology from Europe, which is the scheme with the longest time and the most extensive influence. This scheme combines the non-contact smart card technology with the mobile phone, integrates the radio frequency chip into the mother board of mobile phone, realizes the communication between the mobile phone and the Point of Sale (POS) machine or the card reader, and thus realizes the mobile phone payment. The maximum defect of this way lies in that if the user wants to use the mobile phone payment, the user must select the mobile phone with the NFC function.

The second kind is a frequently-used SIM PASS standard based on 13.56MHZ at present. The SIMpass technology integrates the DI card technology and the Subscriber Identity Module (SIM) card technology together, or it is called two-interface SIM card, that is, it has two work interfaces, the contact interface and the non-contact interface, wherein the contact interface is used for realizing the SIM function, and the non-contact interface is used for realizing the payment function, which is compatible with a plurality of application specifications of the smart card.

The third kind is the RFID_SIM based on 2.4GHz, of which the realization mechanism is similar to the above SIMpass.

From the above introduction of the mainstream mobile phone payment technology, it can be seen that the current mobile phone payment technology is basically limited to short distance payment technology.

The remote payment function is limited by the network security and the current technology, and is not used widely. The current technology means is mainly verifying the information such as the ID information, login password and mobile phone password of the mobile phone user and so on, that is, the remote payment is performed. However, the personal information of the mobile phone user is very easy to be captured by some lawbreakers when the information is transmitted through short message or the Wireless Application Protocol (WAP), thus causing enormous losses. It can be predicted that the security performance of the mobile phone payment will be the key factor limiting whether it is applied extensively.

Therefore, how to realize the safe, simple and convenient remote payment of the mobile terminal becomes the technical problem required to be solved.

### Summary of the Invention

The technical problem that the present invention requires to solve is to provide a system and method for remote payment based on a mobile terminal, and a mobile terminal and a smart card of the mobile terminal in the system, used for realizing the remote payment of the mobile terminal signature.

In order to solve the above-mentioned problem, the present invention provides a system for remote payment based on a mobile terminal, comprising:
an authentication server, configured to ask a mobile terminal for a digital certificate and send a signature instruction to the mobile terminal when the remote payment is performed, and perform remote payment authentication; and
the mobile terminal, comprising a smart card storing the digital certificate; wherein, the smart card is configured to: generate the digital certificate and send the digital certificate to the authentication server when a request for asking for a certificate is received, and send out a signature result and upload the signature result to the authentication server when the signature instruction is received.

The remote payment system further comprises:
a browser module, configured to: provide an interactive interface of the authentication server and the smart card, send the request for asking for the certificate and the signature instruction to the smart card of the mobile terminal, and upload the digital certificate and the signature result to the authentication server; wherein,
the browser module and the smart card perform interaction by adopting a personal computer / a smart card channel, and a Cryptographic Service Provider (CSP) application plugin is built-in in the browser module.

The browser module locates in a computer operating system of the mobile terminal, or in an operating system of a personal computer connecting with the mobile terminal.

The smart card of the mobile terminal is further configured to: apply for the digital certificate from the authentication server, generate a private-public key pair when a private-public key pair generation request is received, upload public key information to the authentication server after a public key information request command is received, and receive and store the digital certificate sent by the authentication server from the authentication server; and
the authentication server is further configured to: send the private-public key pair generation request according to a request of the mobile terminal, receive the public key information, generate the digital certificate and send the digital certificate to the mobile terminal.

The smart card of the mobile terminal comprises: a file system module, a security system module, an over the air (OTA) function module, and a RSA function module, wherein,
the RSA function module is configured to generate the private-public key pair;
the security system module is configured to perform an encryption operation;
the file system module is configured to store the digital certificate; and the over the air (OTA) function module belongs to an air interface module, and the OTA function module connects to a wireless network.

In order to solve the above-mentioned problem, the present invention further provides a method for remote payment based on a mobile terminal, comprising:
an authentication server asking a mobile terminal for a digital certificate, the mobile terminal transmitting a certificate reading instruction to a built-in smart card, after the smart card exports a stored digital certificate, the mobile terminal transmitting the digital certificate to the authentication server for certificate registration; and
the authentication server sending a signature instruction to the mobile terminal, the mobile terminal transmitting a private key signature instruction to the built-in smart card, and the smart card sending out a signature result and the mobile terminal reporting the signature result to the authentication server.

In the step of the smart card exporting a stored digital certificate, the digital certificate stored by the smart card of the mobile terminal is obtained by the mobile terminal performing an online application to the authentication server, wherein, the way of the mobile terminal obtaining the digital certificate by performing the online application to the authentication server comprises:
the mobile terminal applying for the digital certificate from the authentication server, and the authentication server sending a private-public key pair generation request according to a request of the mobile terminal;
the mobile terminal generating a private-public key pair according to the private-public key pair generation request, and uploading public key information to the authentication server after a public key information request command is received;
the authentication server generating the digital certificate and sending the digital certificate to the mobile terminal after verifying the public key information; and
the mobile terminal receiving and storing the digital certificate sent by the authentication server in the smart card.

The mobile terminal and the authentication server perform interaction through a browser; and
a Cryptographic Service Provider (CSP) application plugin is built-in in the browser, and the browser and the smart card perform the interaction by adopting a personal computer / a smart card channel.

Instructions of the mobile terminal and the authentication server performing the interaction comprise: a security service instruction and a returned data / state instruction;
wherein, the security service instruction comprises one or a combination of the following instructions: a private-public key generation instruction; a signature verification instruction; an encryption and decryption instruction; a certificate reading instruction; and a public key reading instruction;
wherein, the returned data / state comprises one or a combination of the followings: public key data; public key certificate data; a result value of a private key signature; and error state information.

In order to solve the above-mentioned problem, the present invention further provides a mobile terminal, comprising a smart card storing a digital certificate; wherein,
the smart card is configured to: generate the digital certificate and send the digital certificate to an authentication server when a request for asking for a certificate is received, and send out a signature result and upload the signature result to the authentication server when a signature instruction is received.

The smart card of the mobile terminal is further configured to: apply for the digital certificate from the authentication server, generate a private-public key pair when a private-public key pair generation request is received, upload public key information to the authentication server after a public key information request command is received, and receive and store the digital certificate sent by the authentication server from the authentication server; and

The smart card comprises: a file system module, a security system module, an over the air (OTA) function module, and a RSA function module, wherein,
the RSA function module is configured to generate a private-public key pair;
the security system module is configured to perform an encryption operation;
the file system module is configured to store the digital certificate; and
the over the air (OTA) function module belongs to an air interface module, and the OTA function module connects to a wireless network.

In order to solve the above-mentioned problem, the present invention further provides a smart card, which is built-in in a mobile terminal and performs interaction with a personal computer system end through a personal computer / a smart card channel; wherein,
the smart card comprises: a file system module, a security system module, an over the air (OTA) function module, and a RSA function module, wherein,
the RSA function module is configured to generate a private-public key pair;
the security system module is configured to perform an encryption operation;
the file system module is configured to store a digital certificate; and
the over the air (OTA) function module belongs to an air interface module, and the OTA function module connects to a wireless network.

The digital certificate stored by the file system module is for being sent to an authentication server by the mobile terminal when a request for asking for a certificate is received;
the security system module is configured to perform the encryption operation according to the following way: performing the encryption on a signature when a signature instruction is received, and uploading an encrypted signature result to the authentication server; and
the RSA function module is configured to generate a private-public key pair according to the following way: generating the private-public key pair when a private-public key pair generation request is received in a process of the mobile terminal applying for the digital certificate from the authentication server.

Compared with the current technology, both the generation of the private-public key pair and the storage of the certificate are performed at the local mobile terminal in the present invention, which has higher security and portability. In the process of the remote payment, the digital certificate and signature (that is, the password) of the user needs to be used. Similarly, the mobile terminal connects with the PC end through the data interface, and the server website of the PC end sends the certificate request, and the mobile terminal obtains the request and uploads the digital certificate. The PC end registers the certificate to the browser and then sends to the server, preparing for verifying the signature. The server end initiates the private-public key pair request after receiving the certificate. After the mobile terminal uploads the private-public key successfully, verifying the signature ends.

The present invention not only breaks through the limitation of short distance of the mobile phone payment, but also has more security and privacy than the manner of transmitting the personal ID and password by using short message and WAP. Meanwhile, if the browser of the mobile terminal itself is used, there is no need to depend on the external computer, and the mobile terminal directly performs the interaction with the authentication server, which realizes the operations, such as the self-service certificate application and the signature verification, etc. The present invention has higher security and portability, thus bringing the convenience of usage to the user when the remote payment is performed, which helps protect the individual privacy information of the user and ensures the security of the remote payment.

### Brief Description of Drawings

FIG. 1 is a schematic diagram of a system for realizing remote payment by connecting a mobile terminal with an external PC;
FIG. 2 is a schematic diagram of a system for realizing remote payment by a mobile terminal using an internal PC operating system;
FIG. 3 is a connection diagram of a PC/SC channel between a smart card of a mobile terminal and a PC side;
FIG. 4 is a schematic diagram of a function module at a smart card side and a PC side;
FIG. 5 is a flow chart of a mobile terminal performing certificate application;
FIG. 6 is a flow chart of a mobile terminal performing remote payment signature verification.

### Preferred Embodiments of the Present Invention

In order to make the objective, technical scheme and advantage of the present invention more clear, the present invention is described in detail with reference to the accompanying drawings hereinafter. It should be illustrated that, in the case of not conflicting, the embodiments in the present application and features in these embodiments can be combined with each other at random.

The system for remote payment based on a mobile terminal signature of the present invention realizes the support to the remote payment function by modifying the mobile terminal, the browser module and the data channel between the smart card of the mobile terminal and the browser.

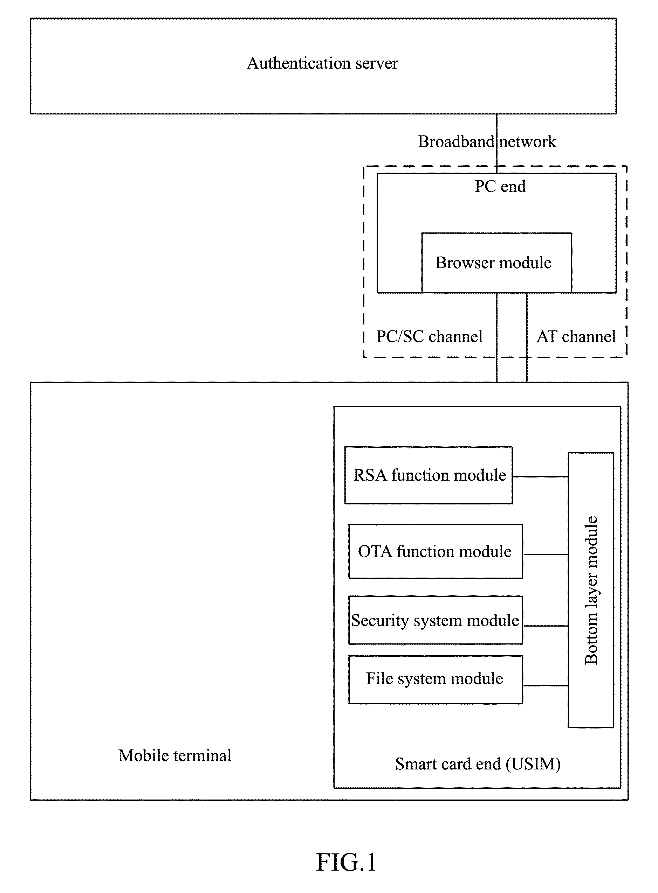

As shown in FIG. 1, it shows a schematic diagram of a typical system for remote payment based on the mobile terminal signature. The system for remote payment based on the mobile terminal signature includes: a mobile terminal, a Personal Computer (PC) end, and an authentication server.

The mobile terminal includes a Smart Card (SC). There is already an AT channel between the mobile terminal and the PC end, and the personal computer / smart card PC/SC channel also needs to be added, which is used to be able to perform the communication between the smart card and the PC standard device. The PC/SC channel is a standard structure defined for the smart card visiting the Windows platform, used for transmitting the self-defined APL Protocol Data Unit (APDU) instruction. Correspondingly, the PC/SC driver needs to be added in the driver program of the mobile terminal.

The PC end has a browser module, and it needs to perform improvement on the browser in order to support the CSP API. The Cryptographic Service Provider (CSP) is used for the services, such as key generation / exchange, encryption and decryption, etc.

The authentication server is used to generate the digital certificate, send and verify the digital certificate.

Since both the certificate application and the signature verification of the mobile terminal mainly take place between the authentication server and the smart card, and they needs to be forwarded by the browser and the mobile terminal therebetween, the mutual data interaction is performed through the PC/SC channel.

The PC end can be an ordinary personal computer or notebook computer or mobile device with personal computer system, and it can perform network connection with the authentication server through the wired broadband network or the wireless broadband network.

In the system shown in FIG. 1, the mobile terminal, together with its built-in smart card, is equivalent to directly connecting the card shield device on the computer system, such as the USBKEY of the bank. That smart card can have both the communication function and the card shield function. The smart card can be a USIM card.

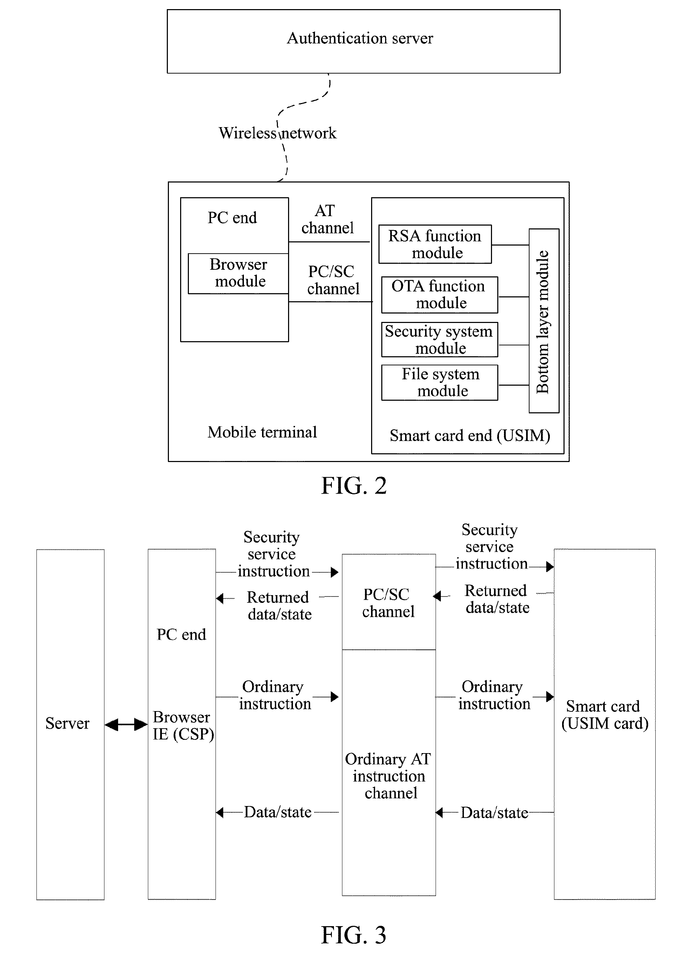

FIG. 2 is another schematic diagram of typical system for remote payment based on the mobile terminal signature. With the popularization of the smart mobile terminals such as the smart mobile phone and so on, the function of the mobile terminal is stronger and stronger, and a plurality of mobile terminals have the personal operating system, which can realize the function that the ordinary PC can realize, for example, the mobile terminal can realize the Internet service through the browser, that is to say, it is equivalent to the PC side also being built-in inside the mobile terminal. The smart card interacts with the browser module, and the mobile terminal connects with the authentication server through the wireless network.

In FIG. 2, the mobile terminal also needs to be modified, that is, the personal computer/smart card PC/SC channel between the built-in smart card and the browser module and the corresponding driver program are added, and the CSP application plugin is added in the browser module.

In the system shown in FIG. 1 and FIG. 2, after the improvement, the mobile terminal with the smart card can guarantee the support to the channel of the security service instruction and the returned data flow. The related APDU instruction is transmitted to the smart card end (such as the Universal Subscriber Identity Module (USIM)) through this PC/SC channel, which enables the user to realize the function of the electronic signature and identity authentication through the operation of the browser in the process of the remote payment. The sending of the digital certificate of the authentication server, the private-public key pair generated by the mobile terminal and downloading and uploading of the digital certificate are performed through the PC/SC channel.

In the system shown in FIG. 1 and FIG. 2, the smart card includes: a file system module, a security system module, an over the air (OTA) function module and a RSA coprocessor, etc. Wherein, the file system module is configured to store the digital certificate, the RSA coprocessor is configured to generate the private-public key pair, the security system module mainly plays a role of encryption, and OTA function module belongs to an air interface module, and can be used by the user to connect to a network.

As shown in FIG. 3, it shows a schematic diagram of transmitting the security service instruction sent by the authentication server and the data state information returned by the mobile terminal based on the PC/SC channel. The security service instruction and the data used in the remote payment are all transmitted through the PC/SC channel, and the ordinary instruction and the data can be transmitted through the existing AT channel.

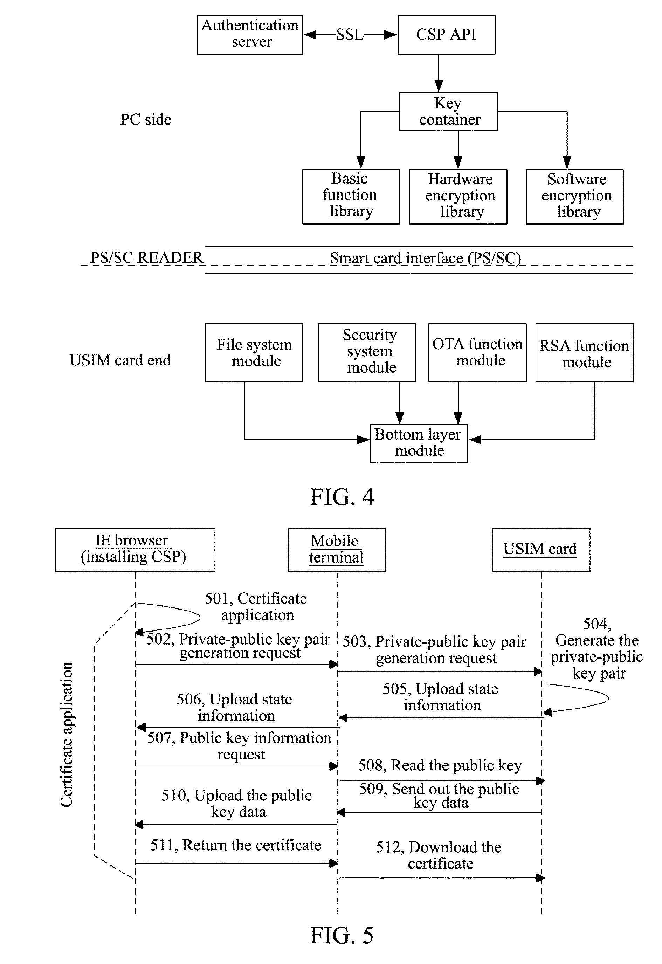

As shown in FIG. 4, it shows a detailed schematic diagram of the PC side and the smart card side (USIM card side) classified based on the PC/SC channel.

Wherein, on the PC side, the key container is a part of the key database, which includes all the key pairs belonged to one particular user. The encryption library includes a hardware encryption library and a software encryption library, which can be a key database used for storing the key containers of a plurality of users. The CSP API plugin can be imbedded and combined in the browser, and communicates with the authentication server through the Secure Sockets Layer (SSL).

Wherein, in the smart card (USIM card) side, it includes: the file system module, the security system module, the OTA function module and the RSA function module. The RSA function module is a RSA coprocessor used for generating the private-public key pair. The file system module is used for storing the digital certificate.

Between the PC side and the smart card side, the PC/SC channel is added. The PC/SC channel is one standard structure defined for the smart card visiting the Windows platform, used for transmitting the self-defined APDU instruction. The APDU instruction includes the security service instruction and the state information instruction. The PC/SC channel is further used for transmitting the sending and downloading of the data certificating etc. the CSP belongs to the WINDOWS development content, and it is integrated as one assembly in the browser after the development is finished, to realize the support of the browser to the private-public key.

When the mobile terminal connects to the PC end in FIG. 1, it can connect to the PC end through the physical USB interface, and the transmission of the data between the mobile terminal and the PC end is performed through the standard PC/SC channel, which guarantees the security of the data.

In order to realize the remote payment of the mobile terminal of the present invention, the newly added APDU instruction is mainly classified as: the security service instruction and the returned data/state instruction.

Wherein, the security service instruction mainly includes: the private-public key generation instruction; the signature verification instruction; the encryption and decryption instruction; the certificate reading instruction; and the public key reading instruction.

Wherein, the returned data/state mainly includes: the public key data; the public key certificate data; the result value of the private key signature; and the error state information.

In order to realize the remote payment of the mobile terminal, it needs to ask for the digital certificate from the authentication server firstly and it only can realize the online payment after the mobile terminal stores the digital certificate. As shown in FIG. 5, it provides a flow chart of the certificate application stages that the mobile terminal applies for the certificate from the authentication server. Since the smart card is adopted in the mobile terminal, the type of the customer certificate applied by the mobile terminal from the authentication server is: the user type of the smart card.

The mobile terminal can apply for the customer certificate from the certificate application website (CA or CA agent) by using the browser in its own operating system or the browser in the operating system of the connected PC, and send the application request to the authentication server. The specific application process is as follows:
501: the mobile terminal applies for the certificate from the authentication server through the browser;
502: the authentication server sends the private-public key pair generation request to the mobile terminal;
503: the mobile terminal transparently transmits the private-public key pair generation instruction to the smart card (the USIM card);
504: the smart card generates the private-public key pair by using the internal RSA coprocessor, and stores it in the secure storage area (that is the file system module);
505: the smart card returns the state information to the mobile terminal;
506: the mobile terminal uploads the state information to the authentication server;
507: the authentication server sends the public key information request command to the mobile terminal;
508: the mobile terminal transparently transmits the public key information request command to the smart card, and the smart card reads the public key information;
509: the smart card sends out the public key data to the mobile terminal;
510: the mobile terminal uploads the public key data to the authentication server;
511: the authentication server sends the customer certificate to the mobile terminal;
512: the mobile terminal downloads the certificate, and stores the customer certificate in the smart card.

When the mobile terminal stores the digital certificates, it can perform the interaction with the authentication server and realize the remote payment; certainly, the way of the mobile terminal obtaining the digital certificate is not limited to the online obtaining way shown in FIG. 5, and it also can be obtained by preset and using other ways.

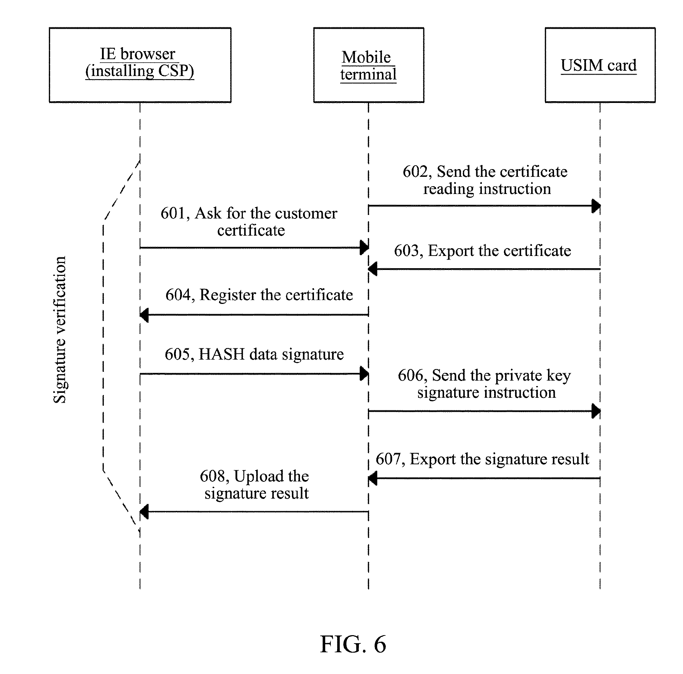

As shown in FIG. 6, it provides a flow chart of the signature verification stages when the mobile terminal performs the remote payment.
601: the authentication server asks for the digital certificate of customer from the mobile terminal;
602: the mobile terminal transparently transmits the certificate reading instruction to the smart card;
603: the smart card sends out the public key certificate information of the customer to the mobile terminal;
604: the mobile terminal registers the public key certificate information to the IE browser on the PC end, and sends it to the authentication server for verifying the public key certificate information;
605: the authentication server sends the signature instruction to the mobile terminal, and sends the data processed by using the HASH algorithm to the mobile terminal;
606: the mobile terminal transparently transmits the private key signature instruction to the smart card;
607: the smart card sends out the signature result to the mobile terminal;
608: the mobile terminal uploads the signature result to the authentication center, and finishes the signature verification of the remote payment.

The smart card supporting the basic security instruction is built-in in the mobile terminal of the present invention, such as the USIM card, which can be called the "card shield". The smart card after improvement has the remote payment and the security function except the communication function. In order to realize the interaction between the smart card and the external browser, through adding the PC/SC channel and the support to the PC/SC driver in the mobile terminal and the modification of the browser, the application program plugin CSPAPI and so on of the PC end, it develops a series of APDU instructions, which realizes the application and storage of the mobile certificate and the verification of the signature.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The above description is only the preferred embodiments of the present invention and is not intended to limit the present invention. For those skilled in the art, the present invention can have various modifications and variations. All of modifications, equivalents and/or variations without departing from the spirit and essence of the present invention should be included in the scope of the claims of the present invention.

### Industrial Applicability

The present invention not only breaks through the limitation of short distance of the mobile phone payment, but also has more security and privacy than the manner of transmitting the personal ID and password by using short message and WAP. Meanwhile, if the browser of the mobile terminal itself is used, there is no need to depend on the external computer, and the mobile terminal directly performs the interaction with the authentication server, which realizes the operations, such as the self-service certificate application and the signature verification, etc. The present invention has higher security and portability, thus bringing the convenience of usage to the user when the remote payment is performed, which helps protect the individual privacy information of the user and ensures the security of the remote payment.

## Claims

1. A system for remote payment based on a mobile terminal, comprising:
an authentication server, configured to ask a mobile terminal for a digital certificate and send a signature instruction to the mobile terminal when the remote payment is performed, and perform remote payment authentication; and
the mobile terminal, comprising a smart card storing the digital certificate; wherein, the smart card is configured to: generate the digital certificate and send the digital certificate to the authentication server when a request for asking for a certificate is received, and send out a signature result and upload the signature result to the authentication server when the signature instruction is received.

2. The system according to claim 1, further comprising:
a browser module, configured to: provide an interactive interface of the authentication server and smart card, send the request for asking for the certificate and the signature instruction to the smart card of the mobile terminal, and upload the digital certificate and the signature result to the authentication server; wherein,
the browser module and the smart card perform interaction by adopting a personal computer/a smart card channel, and a Cryptographic Service Provider (CSP) application plugin is built-in in the browser module.

3. The system according to claim 2, wherein,
the browser module locates in a computer operating system of the mobile terminal, or in an operating system of a personal computer connecting with the mobile terminal.

4. The system according to claim 1, wherein,
the smart card of the mobile terminal is further configured to: apply for the digital certificate from the authentication server, generate a private-public key pair when a private-public key pair generation request is received, upload public key information to the authentication server after a public key information request command is received, and receive and store the digital certificate sent by the authentication server from the authentication server; and
the authentication server is further configured to: send the private-public key pair generation request according to a request of the mobile terminal, receive the public key information, generate the digital certificate and send the digital certificate to the mobile terminal.

5. The system according to claim 4, wherein,
the smart card of the mobile terminal comprises: a file system module, a security system module, an over the air (OTA) function module, and a RSA function module, wherein,
the RSA function module is configured to generate the private-public key pair;
the security system module is configured to perform an encryption operation;
the file system module is configured to store the digital certificate; and
the OTA function module belongs to an air interface module, and the OTA function module connects to a wireless network.

6. A method for remote payment based on a mobile terminal, comprising:
an authentication server asking a mobile terminal for a digital certificate, the mobile terminal transmitting a certificate reading instruction to a built-in smart card, and after the smart card exports a stored digital certificate, the mobile terminal transmitting the digital certificate to the authentication server for certificate registration; and
the authentication server sending a signature instruction to the mobile terminal, the mobile terminal transmitting a private key signature instruction to the built-in smart card, and the smart card sending out a signature result and the mobile terminal reporting the signature result to the authentication server.

7. The method according to claim 6, wherein, in the step of the smart card exporting a stored digital certificate, the digital certificate stored by the smart card of the mobile terminal is obtained by the mobile terminal performing an online application to the authentication server, wherein, the way of the mobile terminal obtaining the digital certificate by performing the online application to the authentication server comprises:
the mobile terminal applying for the digital certificate from the authentication server, and the authentication server sending a private-public key pair generation request according to a request of the mobile terminal;
the mobile terminal generating a private-public key pair according to the private-public key pair generation request, and uploading public key information to the authentication server after receiving a public key information request command;
the authentication server generating the digital certificate and sending the digital certificate to the mobile terminal after verifying the public key information; and
the mobile terminal receiving and storing the digital certificate sent by the authentication server in the smart card.

8. The method according to claim 6 or 7, wherein,
the mobile terminal and the authentication server perform interaction through a browser; and
a Cryptographic Service Provider (CSP) application plugin is built-in in the browser, and the browser and the smart card perform the interaction by adopting a personal computer/a smart card channel.

9. The method according to claim 8, wherein,
instructions of the mobile terminal and the authentication server performing the interaction comprise: a security service instruction and a returned data/state instruction;
wherein, the security service instruction comprises one or a combination of following instructions: a private-public key generation instruction; a signature verification instruction; an encryption and decryption instruction; a certificate reading instruction; and a public key reading instruction; and
wherein, the returned data/state comprises one or a combination of followings: public key data; public key certificate data; a result value of a private key signature; and error state information.

10. A mobile terminal, comprising a smart card storing a digital certificate; wherein,
the smart card is configured to: generate the digital certificate and send the digital certificate to an authentication server when a request for asking for a certificate is received, and send out a signature result and upload the signature result to the authentication server when a signature instruction is received.

11. The mobile terminal according to claim 10, wherein,
the smart card is further configured to: apply for the digital certificate from the authentication server, generate a private-public key pair when a private-public key pair generation request is received, upload public key information to the authentication server after a public key information request command is received, and receive and store the digital certificate sent by the authentication server from the authentication server.

12. The mobile terminal according to claim 10 or 11, wherein,
the smart card comprises: a file system module, a security system module, an over the air (OTA) function module and a RSA function module, wherein,
the RSA function module is configured to generate a private-public key pair;
the security system module is configured to perform an encryption operation;
the file system module is configured to store the digital certificate; and
the OTA function module belongs to an air interface module, and the OTA function module connects to a wireless network.

13. A smart card, **characterized in that** the smart card is built-in in a mobile terminal and performs interaction with a personal computer system end through a personal computer/a smart card channel;
the smart card comprises: a file system module, a security system module, an over the air (OTA) function module and a RSA function module, wherein,
the RSA function module is configured to generate a private-public key pair;
the security system module is configured to perform an encryption operation;
the file system module is configured to store a digital certificate; and
the OTA function module belongs to an air interface module, and the OTA function module connects to a wireless network.

14. The smart card according to claim 13, wherein,
the digital certificate stored by the file system module is for being sent by the mobile terminal to an authentication server when a request for asking for a certificate is received;
the security system module is configured to perform the encryption operation according to a following way: performing encryption on a signature when a signature instruction is received, and uploading an encrypted signature result to the authentication server; and
the RSA function module is configured to generate the private-public key pair according to a following way: generate the private-public key pair when a private-public key pair generation request is received in a process of the mobile terminal applying for the digital certificate from the authentication server.
